# EUROPEAN PATENT SPECIFICATION

(11) **EP 1 631 175 B1**
(45) Date of publication and mention of the grant of the patent: **11.03.2009**
(21) Application number: 04748648.5
(22) Date of filing: 11.06.2004
(51) Int. Cl.: A47J 27/16

(54) **INSTALLATION FOR TREATING AN OBJECT WITH STEAM**
ANLAGE ZUR BEHANDLUNG EINES OBJEKTS MIT DAMPF
INSTALLATION POUR TRAITER UN OBJET A LA VAPEUR

(30) Priority: 12.06.2003 NL 1023653
(43) Date of publication of application: 08.03.2006
(73) Proprietor: Food Technology Noord-Oost Nederland B.V, 7602 KA Almelo (NL)
(72) Inventor: DOOMERNIK, Cornelis, NL-5351 PJ Berghem (NL); PREIN, Johannes, Hendricus, C.P.M., 5658 BH Eindhoven (NL)
(74) Representative: van Westenbrugge, Andries
(86) International application number: PCT/NL2004/000416
(87) International publication number: WO 2004/110229

(56) References cited:
- NL-C- 1 005 815
- US-A- 1 992 398
- US-A- 3 982 481
- US-A- 5 184 538
- US-E- R E34 646

## Description

The present invention relates to an installation for treating an object with steam, such as a steam cooker, comprising:
- a horizontal treatment tunnel with an entry end and an exit end, wherein the interior of the treatment tunnel is in communication with the environment such that the pressure prevailing in the treatment tunnel is essentially the same as ambient pressure;
- an input section adjoining the entry end for introducing the object to be treated into the treatment tunnel;
- an output section adjoining the exit end for discharging the treated object from the treatment tunnel;
- at least one temperature sensor;
- a steam feed system for feeding steam into the treatment tunnel;
- a controller that is equipped to maintain, at least in the upper section of the treatment tunnel, an air-free zone containing saturated steam on the basis of the signal from the at least one temperature sensor; and
- a transport system for feeding the object to be treated through the treatment tunnel.

According to the invention as defined in the claims, a treatment tunnel running in the horizontal direction is understood to be a treatment tunnel where the entry end and exit end, viewed in the horizontal direction, run some distance apart. Such a treatment tunnel will usually be a horizontal treatment tunnel or an inclined treatment tunnel. The inclination will usually be less than 30°.

An installation of this type is disclosed in US 5 184 538. This publication discloses a steam treatment installation with which the product is brought to a treatment chamber on a plastic belt. This treatment chamber is open at both longitudinal ends. In the chamber a distinction is made between a higher section in which there is a pure steam atmosphere under atmospheric pressure and a lower section in which there is a vapour/air mixture. On the entry side the plastic belt is brought obliquely upwards to the level of the higher section. On the exit side the belt is brought obliquely downwards again from the higher section to a level below the lower section. An input chamber and output chamber closed off from the environment at the top and sides are formed around the feed section on the entry side and the discharge section on the exit side, respectively. The input chamber and output chamber are open at the bottom for guiding the plastic belt in and out. There is a temperature sensor in the lower section of the cooker chamber. Because there is a vapour/air mixture in this lower section, a lower temperature is detected in this section than in the higher section containing a pure steam atmosphere. On the basis of this detected temperature, a steam valve is controlled by a controller such that the temperature at the location of the sensor is kept constant. The aim is thus to maintain a pure steam atmosphere at the location of the product and to restrict steam losses from inside to outside to a minimum.

The installation disclosed in US 5 184 538 has a number of disadvantages. One disadvantage is that the installation is relatively large in size. Another disadvantage is that the accuracy with which the controller maintains the pure steam atmosphere in the higher section leaves something to be desired and is susceptible to interference from the environment. A further disadvantage is that the field of application of the installation according to US 5 184 538 is limited as a consequence of its design.

The aim of the present invention is to provide an improved installation of the type mentioned in the preamble, in particular to provide an installation which at least partially overcomes the disadvantages of US 5 184 538.

According to the invention, the aim of providing an improved installation of the type mentioned in the preamble is achieved with an installation according to the precharacterising clause of Claim 1, in that the treatment tunnel is provided with at least one discharge pipe running downwards, which at one end is in communication with the interior of the treatment tunnel via tunnel orifice and at the other end is in communication with the environment via an environment orifice and in that a said at least one temperature sensor is provided in the at least one discharge pipe. By providing such a discharge pipe it is possible to discharge the air - pushed downwards by the lighter steam - directly from the treatment tunnel instead of via the input section and/or output section. On the one hand, this makes a higher degree of steam filling of the treatment tunnel possible - the treatment tunnel can even be completely filled with a pure steam atmosphere. On the other hand, this enables a reduction in the height dimensions of the treatment tunnel and also a reduction in the height dimensions of the input section and output section - after all, the discharge of air no longer has to take place, or at least no longer has to take place exclusively, via the input section and/or discharge section. The tunnel orifice of the discharge pipe will be provided at the bottom, that is to say at the height of the transport system or lower. Preferably, the tunnel orifice is provided at the bottom of the treatment tunnel. The environment orifice will be lower than the tunnel orifice and more particularly lower than the bottom of the treatment tunnel.

By providing the temperature sensor in the discharge pipe this temperature sensor is less susceptible to interference from the environment. After all, air movements in the environment can produce a draught effect in the treatment tunnel via the input section and/or the output section. Such a draught effect would have an influence on a temperature sensor arranged in the treatment tunnel. By installing the temperature sensor in the discharge pipe this temperature sensor is protected from such draught effects. With such an embodiment the degree of utilisation of the treatment tunnel can be further increased or the structural height of the treatment tunnel can be further reduced by equipping the controller according to the invention such that the air-free zone containing saturated steam extends into the at least one discharge pipe.

With a view to more compact height dimensions of the treatment tunnel or a greater degree of utilisation of the treatment tunnel it is advantageous according to the invention if the controller is equipped such that the air-free zone containing saturated steam extends as far as the bottom of the treatment tunnel.

According to a further embodiment of the invention it is advantageous if the steam feed system opens into the top of the upper section of the treatment tunnel and if a cap in the form of a plate is provided in the treatment tunnel, between the outlet of the steam feed system and the path that the object to be treated follows through the treatment tunnel, wherein the cap slopes downwards in the lateral direction of the tunnel and wherein the cap is provided with perforations with a raised rim around each perforation on the side facing upwards. Deposition of condensation on the product to be treated can be counteracted in this way. The condensation deposits on the side of the cap facing away from the product and is then discharged laterally by the fall of the cap. The raised rim around each perforation prevents condensation being able to reach the product through the cap via the perforation. The perforations, as such, do allow the passage of steam through the cap.

According to a further advantageous embodiment of the invention, the treatment tunnel is subdivided into compartments in the longitudinal direction, with a tunnel partition suspended from the roof of the tunnel at the boundary between each two compartments. This partition, which allows passage of the object to be treated from the one compartment

It is noted that US 3,982,481 discloses a blanching apparatus utilizing steam as the blanching medium. This apparatus has a transport conveyor for transporting produce through a blanching chamber into which a plurality of nozzles direct steam. Gases heavier than steam are vented through a vent tube mounted low in the blanching chamber. The temperature in the bleaching chamber is controlled by controlling the introduction of high temperature steam into the blanching chamber by means of a valve which is responsive to a temperature probe located in the blanching chamber. to the other compartment, for example through a passageway in the bottom of the partition or because the partition does not extend to the base of the treatment tunnel, counteracts transport of air-free steam from the one compartment to the other compartment. Such a partition thus enables independent control of the steam feed to the successive compartments of the treatment tunnel. Furthermore, such a partition contributes to further reduction of interference from the environment having an effect in the treatment tunnel. In order to be able to control the steam climate accurately in each compartment in the case of such an embodiment, it is advantageous according to the invention if the treatment tunnel is provided with a said at least one discharge pipe per compartment - there is then no need for transport of air to take place from the one compartment to the other compartment via the passageways beneath or in the partitions - and if said discharge pipe is preferably provided with a temperature sensor as defined in claim 1. The latter - the temperature sensor in each discharge pipe - makes it possible to be able to control the steam feed to, and steam conditions in, each compartment completely, or at least virtually completely, independently of the adjoining compartments.

In order further to counteract ambient influences having an effect on the first and last compartment of the treatment tunnel, or possibly the sole compartment of the treatment tunnel, it is advantageous according to the invention if an entry partition suspended from the roof of the treatment tunnel is provided at the boundary of the treatment tunnel and the input section and the output section, respectively.

In order to prevent steam, or at least air-free steam, being able to escape to the environment via the input section and/or the output section, it is advantageous according to the invention, in the case of an installation where the input section and/or the output section have at least one passage with an environment orifice, via which the input section and/or the output section, respectively, are in communication with the environment, if the environment orifice of the passage in the input section located closest to the treatment tunnel and/or of the passage in the output section located closest to the treatment tunnel, respectively, has a top that is lower than or at the same level as the bottom of the environment orifice of the at least one discharge pipe.

According to a further embodiment, with this arrangement it is advantageous if the input section has an input compartment that is essentially closed with respect to the environment and if the input compartment has an input passage for objects defining the environment orifice located closest to the treatment tunnel.

According to another embodiment of the invention, with this arrangement it is advantageous if the input section has a number of input compartments connected in series with, per input compartment, at the bottom a discharge pipe running downwards with, in each case, a said environment orifice and if an input partition suspended from the roof of the input section is provided at the boundary between each two input compartments. Such an embodiment makes it possible to construct the treatment installation according to the invention completely straight instead of, as is known from US 5 184 538, to construct this with an upward sloping input section and a downward sloping output section.

According to a further advantageous embodiment of the invention, it is advantageous if the output section has an output compartment that is essentially closed with respect to the environment and if the output compartment has an output passage for objects defining the environment orifice closest to the treatment tunnel. This output passage can, for example, be the bottom end of a chute in the case of objects that can be dumped out.

According to a further advantageous embodiment of the invention, the output section has a number of output compartments connected in series with, per output compartment, at the bottom a discharge pipe running downwards with, in each case, a said environment orifice and an output partition suspended from the roof of the output section is provided at the boundary between each two output compartments. This embodiment makes it possible for the treatment installation according to the invention to be constructed straight at the output end. In connection with ensuring that the air-free steam environment is run down towards the end, or at least the passageway to the environment, in this context it is advantageous according to the invention if the output section is provided with a cooling system, preferably a cooling system installed along the base of the output section.

The present invention will be explained in more detail below with reference to examples shown diagrammatically in the drawing. In the drawing:
Figure 1 shows a longitudinal sectional view of an installation according to the invention;
Figure 2 shows a longitudinal sectional view of a first embodiment of an input section for an installation according to the invention;
Figure 3 shows a longitudinal sectional view of a second embodiment of an input section for an installation according to the invention;
Figure 4 shows a longitudinal sectional view of a first embodiment of an output section for an installation according to the invention;
Figure 5 shows a longitudinal sectional view of a second embodiment of an output section for an installation according to the invention;
Figure 6 shows a longitudinal sectional view of a third embodiment of an output section for an installation according to the invention;
Figure 7 shows a cross-sectional view along the line VII-VII in Fig. 1;
Figure 8 shows a diagrammatic, perspective view of part of a cap from the installation according to the invention;
Figure 9 shows, as a detail, a variant of the construction of the discharge pipes in Figure 1; and
Figure 10 shows, highly diagrammatically, a treatment tunnel arranged at an incline.

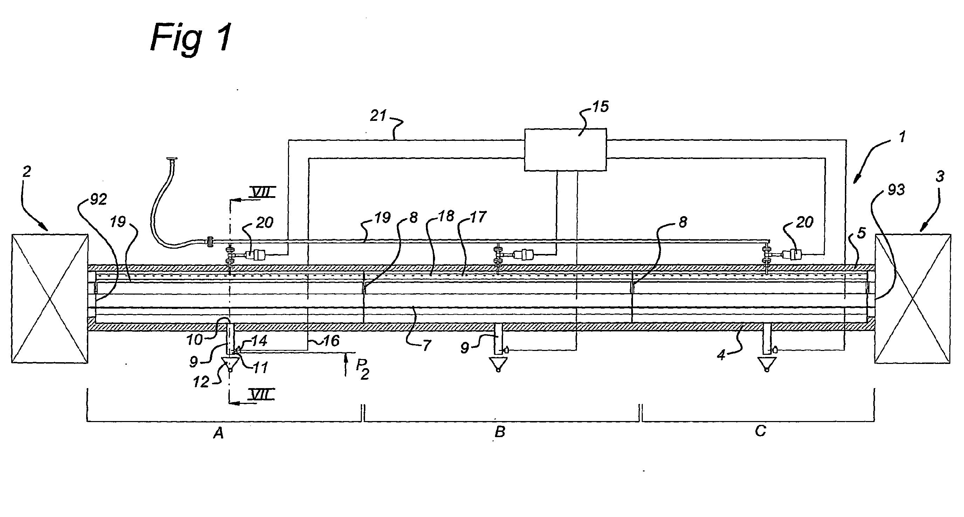

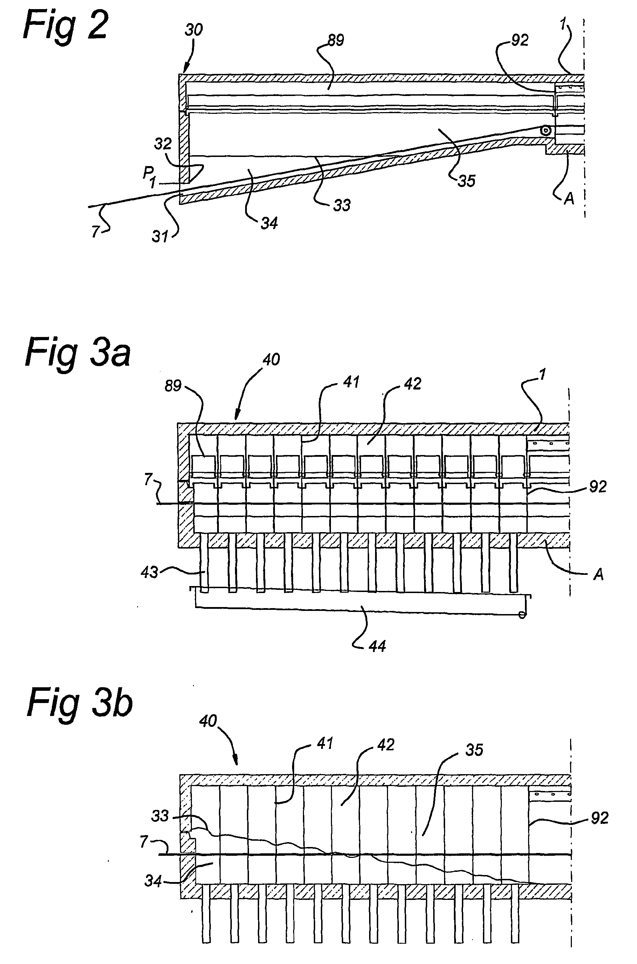

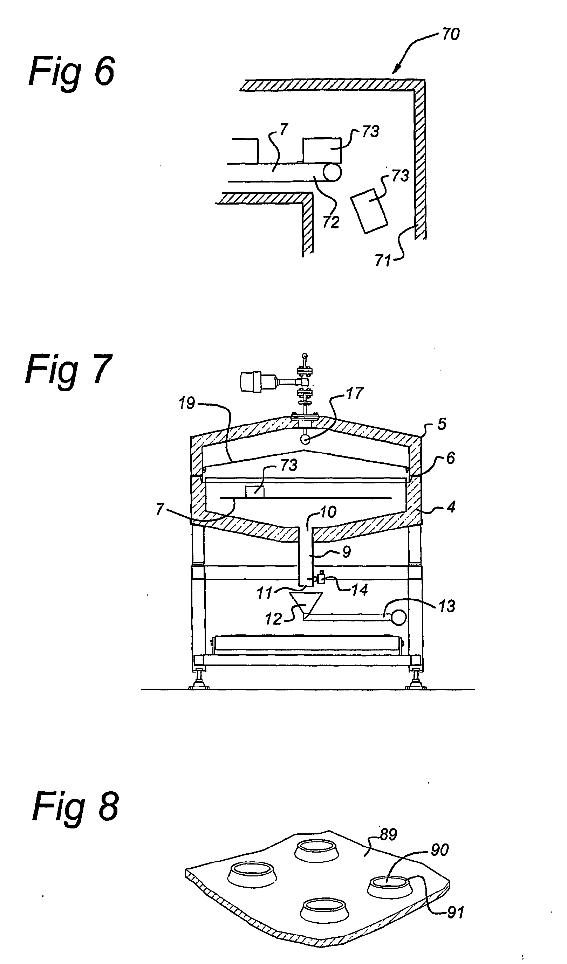

With reference to Fig. 1 and Fig. 7, the installation according to the invention comprises an essentially horizontal treatment tunnel 1 with an input section 2 at the one end and an output section 3 at the other end. The input section 2 and output section 3 are shown highly diagrammatically in Fig. 1. More detailed examples of embodiments of the input section and output section are shown in Fig. 2 to Fig. 6.

The treatment tunnel 1 is made up of a base part 4 and a cap part 5. Base part 4 and cap part 5 can be taken apart along separation line 6 in order to have access to the interior of the tunnel 1 for maintenance etc. Closures are provided along separation surface 6. These closures can be of a wide variety of types. In particular, the closure can be a water seal. However, the closure can also comprise rubber seals.

The upper part 7 of an endless conveyor belt extends through the treatment tunnel 1. Objects to be treated with steam in the installation are fed through the treatment tunnel by means of this conveyor belt 7.

In this example the tunnel 1 is subdivided into three compartments, i.e. the compartments A, B and C. These compartments are separated from one another by means of a partition 8 suspended from the cap part 5. This partition 8 is provided with a passage at the location of the top part 7 of the conveyor belt or terminates some distance above said top part 7 so as to allow objects to be treated in the installation to pass by the tunnel partitions 8. The space required for passage of the objects can optionally be set by providing gates that can be moved up and down in a vertical direction in the tunnel partitions 8. By setting the pass height to the minimum possible, exchange of medium from the one compartment to the other compartment or vice versa is counteracted.

In a corresponding manner, the first compartment A and the last compartment C are also provided with an entry partition 92 and an exit partition 93, respectively, at the transition to the input section and discharge section, respectively.

The treatment tunnel 1 is provided, per compartment, with a discharge pipe 9 which runs downwards and in particular vertically. Each discharge pipe 9 has a top orifice 10 into the tunnel, called the tunnel orifice, at one end and a bottom orifice 11 into the environment, called the environment orifice, at the other end. A collection tray 12 for condensation is provided below the environment orifice 11, which collection tray 12 is connected to a condensation discharge line system 13. The tunnel orifice 10 of the discharge pipe 9 is provided at the bottom of the tunnel. In this case the tunnel orifice 10 is provided below the upper part 7 of the conveyor belt on the bottom of the treatment tunnel.

A temperature sensor 14 is provided in each discharge pipe 9 - or in the case of several discharge pipes 9 per compartment in at least one discharge pipe 9. The temperature sensors 14 are connected via a lead 16 to a controller 15 for transmitting the measured temperature value to the controller 15. The temperature sensor 14 is so mounted that this measures the temperature of a gaseous medium in the interior of the discharge pipe 9, in particular measures this temperature directly.

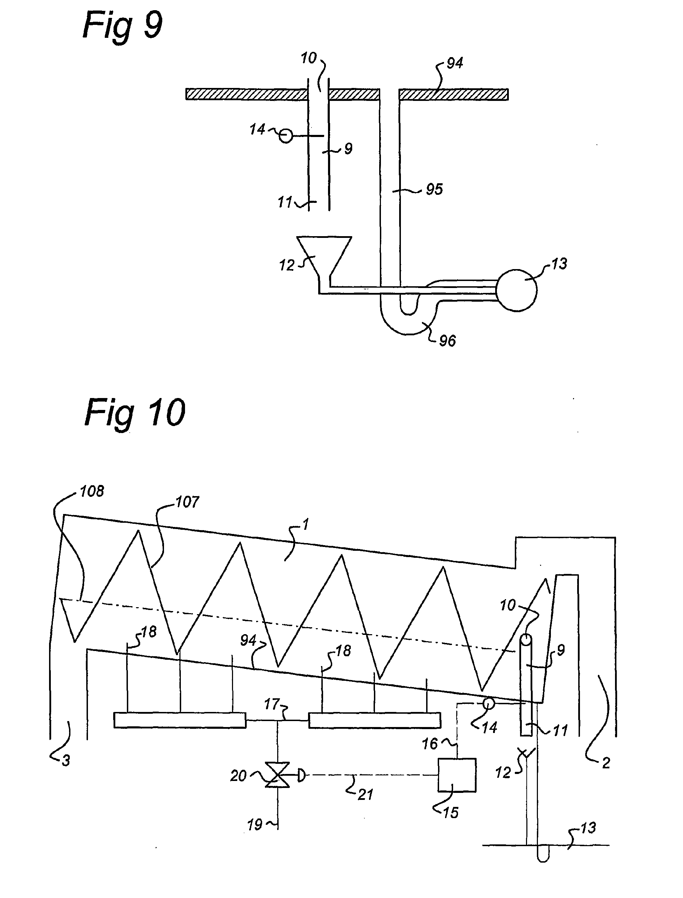

To prevent interference with the temperature sensor caused by passing condensation it is advantageous to make the discharge pipe protrude somewhat into the tunnel - see detail in Fig. 9 - so that the upper orifice 10 is above the base of the tunnel. A collection tray 12 is also provided for any condensation that nevertheless passes. In addition, a condensation discharge 95 with water trap 96 is provided separately from discharge pipe 9.

A steam feed line 17 with numerous openings 18 distributed along the length for the issue of steam extends through the treatment tunnel 1 at the top. If the treatment tunnel is subdivided into several compartments, the steam feed pipe 18 will likewise be subdivided into several compartments or subdivided into several pipe sections. Each compartment of the steam feed pipe or each steam feed pipe 18 is connected via a control valve 20 to a central steam feed line 19. Each control valve 20 is, in turn, connected to the controller 15 via a signal lead 21 such that the throughput position of each control valve 20 can be set from the controller 15.

The basic principle according to which the installation according to the invention functions is known per se and described in US 5 184 538. This basic principle comes down to the fact that steam is lighter than air and in an essentially closed chamber will therefore rise above the air. By providing a discharge for the air, the steam will then at least partially dispel the air from the treatment tunnel. By providing temperature sensors in the lower part of the treatment tunnel, the steam supply can be regulated/controlled as needed depending on the temperature detected by the temperature sensors. The phenomenon that plays a role here is that the temperature in the saturated steam has an essentially constant value and that this decreases in the transition region to air that is not saturated (with steam).

According to the present invention the treatment tunnel is now provided, in particular per compartment if there are several compartments, with a discharge pipe 9 via which the unsaturated air is dispelled by the essentially pure steam atmosphere. The degree of filling of the treatment tunnel with a pure steam atmosphere can be appreciably increased by this means. The presence of any air inclusions can be appreciably reduced, if not entirely precluded, in this way, which is highly advantageous for the efficiency of the treatment process. An additional factor here is that it is usually not possible entirely to preclude entrainment of air into the treatment tunnel via the input section and it is thus highly advantageous if this air can be immediately discharged from the treatment tunnel again.

To increase the control accuracy with which the controller maintains the steam atmosphere in the compartments of the treatment tunnel 1, according to the invention the treatment sensor is, in addition, provided in the discharge pipe 9. In this way the temperature sensor 14 is protected against possible disturbances in the tunnel as a consequence of air movements outside the tunnel. In addition, the degree of filling with pure steam atmosphere in the treatment tunnel can be even further increased if the controller is equipped such that the air-free zone containing saturated steam extends into the at least one discharge pipe. How large the distance is to the region of the pure steam atmosphere at a specific temperature measured by the sensor 14 can be established experimentally. On the basis of this experimental determination, the controller can then be set such that the air-free zone containing saturated steam extends into the discharge pipe(s) 9.

Furthermore, the discharge pipes also counteract air flows in the tunnel as a consequence of the air being dispelled by steam; after all, the air to be dispelled is able to escape via the discharge pipes instead of via the entry/exit of the tunnel.

The discharge pipes 9 also make the entry partition 92 and exit partition 93 and also optional tunnel partitions 8 possible. These partitions 8, 92, 93 very appreciably to completely reduce the risk of disturbances in the tunnel as a consequence of air movements outside the tunnel.

To counteract deposition of condensation on objects to be treated by means of steam, it is advantageous according to the invention to provide, in the treatment tunnel and optionally also in the input and/or output sections that are still to be discussed in more detail, a cap between the outlets in the steam feed system and the path that the object to be treated follows through the treatment tunnel, or as appropriate the input section or output section. This cap will in particular be in the form of a plate and slope downwards in the lateral direction of the tunnel so as to discharge condensation. With this arrangement the cap can have a ridge in the middle and fall on either side. In order to allow steam to pass through, the cap 89 is provided with perforations 90. In order to prevent water of condensation on top of the cap 89 being able to reach the underside of the cap via the perforations 90, the perforations 90 are surrounded all round by a raised rim 91 on top of the cap. Such a cap is easy to produce from sheet material in which perforations are punched. Raised rims 91 will then automatically be produced around the perforations 90 on the exit side of the perforation pins.

The input section 2 can be constructed in a wide variety of ways. One way, which is not shown, can be that the input section is completely closed and that the product is brought directly into the treatment tunnel, after any air has been completely removed, at the entry side. In this context, consideration can be given, for example, to extrudable products, where the extrusion orifice then opens into the input section, in this case at the start of the treatment tunnel. The lower part of the conveyor belt that can be seen in Figure 1 can then also run through the tunnel 1.

Another way in which the input section 2 can be constructed is shown in Fig. 2. The left-hand end of the treatment tunnel 1 in Fig. 1 can still just be seen on the right-hand side in Fig. 2. It can be seen that in Fig. 2 the upper part of the conveyor belt 7 runs at an incline. Furthermore, a cap 89 is optionally also shown in the input section 30 as shown in Fig. 2. The input section 30 has a passage 31 bottom left via which the input section is in communication with the environment. The passage 31 serves as an intake for the upper part 7 of the conveyor belt and the objects to be treated in the installation. The top edge 32 of the passage 31 is at a vertical height level P1. This vertical height level P1 is lower than the vertical height level P2 at which the orifice 11 of the discharge pipe 9 is located. What is achieved in this way is that there is an air zone 34 in the input section 30 immediately after the passage 31, which air zone 34 is still completely covered in the input section 30 by the steam atmosphere 35. The interface between the steam atmosphere 35 and the air fraction 34 is indicated by 33. In particular, steam is prevented from being able to escape from the installation according to the invention via the passage 31 in this way.

Fig. 3 shows another variant of the input section A, indicated by 40. Here again, the left-hand end of the treatment tunnel 1 can still just be seen on the right-hand side. The input section 40 is subdivided by means of input partitions 41 into a number of input compartments 42. Once again, a cap 89 can be provided per input compartment. Each input compartment 42 is provided with a discharge pipe 43 running downwards. A trough 44 runs below the discharge pipes 43. What is achieved by means of this construction of input compartments 42 each with a discharge pipe 43 is that the boundary 33 between the steam environment 35 and the unsaturated air 34 becomes higher as the distance from the treatment tunnel 1 increases. This is shown diagrammatically in Fig. 3b. What can be achieved in this way is that it is possible, without needing to have an incline for the conveyor belt 7, to feed the conveyor belt 7 into the input section 40 at a level where there is unsaturated air inside the input section 40. Escape of steam at the intake is then prevented.

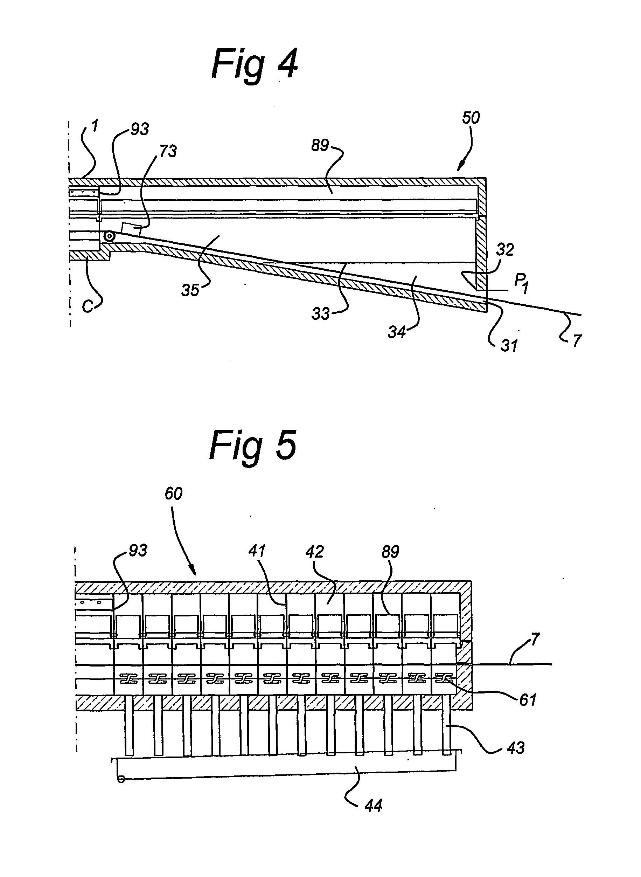

Figure 4 shows, diagrammatically, an output section 50, which output section 50 is essentially the mirrored equivalent of the input section 30. A portion of the treatment tunnel 1 can still just be seen on the left-hand side of Fig. 4. Since the way in which the output section 50 functions is essentially equivalent to the way in which the input section 30 functions, the same reference numerals have been used for output section 50 as for input section 30. Here as well it is again important that the level P1 is lower than the level P2 (see Fig. 1).

Figure 5 shows an output section 60 that is essentially the equivalent of input section 40. Therefore, once again corresponding reference numerals have been used for corresponding components. The various features will not be discussed again here. The discussion of a significant difference compared with the input section in Fig. 3 will suffice. In the case of the input section in Fig. 3 cooling takes place in the first compartments because the objects introduced into the input section 40 carry in cold ambient air and themselves have a relatively low temperature. This cold causes steam present in the input compartments 42 to cool and condense, as a consequence of which the boundary 33 will shift upwards. This shifting up of the boundary 33 is made gradual in the input section 40 by means of the subdivision into the input compartments 42, each with its own discharge pipe 43. In the output section 60, however, much less cooling, or no cooling, of the steam present in the output section 60 will take place since objects that have just been treated are now discharged to the environment here and these treated objects already have a high temperature. In order now to achieve the requisite sloping progression of the boundary 33 between steam 35 and air 34 in the output section 60, or at least to achieve this within a relatively short distance, it is a question of supplying cold to the discharge section. For this purpose cooling means 61 are provided in the output compartments 42, which cooling means 61 are preferably provided along the base. The cooling means 61 can have a different cooling temperature depending on the compartment 42 concerned.

Fig. 6 shows, highly diagrammatically, a third embodiment of an output section 70. This is an output section with a chute 71. As illustrated in Fig. 6, with this arrangement the lower part 72 of the conveyor belt can run inside the treatment tunnel. The output section 70 can be used in particular in the case of objects 73 that can be dumped out.

Fig. 10 shows, highly diagrammatically, a further embodiment of the invention with a treatment tunnel arranged at an incline. As far as possible the same reference numerals have been used for the components as have been used for the same or comparable components in Fig. 1.

The treatment tunnel 1 according to Fig. 10 differs from that according to Fig. 1 essentially in that there is only one compartment, in that the treatment tunnel runs at something of an incline, approximately 10 to 20° with respect to the horizontal; in that the conveyor belt 7 has been replaced by a worm screw 107 and in that the tunnel orifice 10 of the discharge pipe 9 is still provided at the bottom of the tunnel but some distance above the base 94 of the tunnel. The tunnel orifice 10 is at the level of the transport system, here a worm screw 107. Furthermore, the treatment tunnel in Fig. 10 differs from that in Fig. 1 in that the steam feed means open into the bottom of the treatment tunnel 1.

A treatment tunnel as shown in Fig. 10 can be used, for example, to treat potatoes or certain vegetables. The product is tipped into the tunnel 1 via the input section 2 so as then to be fed by means of the worm screw 107 to the output section 3, where it drops downwards via a chute. In this way a layer of product to be treated will be obtained in the tunnel 1, with an upper boundary as shown by the broken line 108. With this arrangement the steam feed openings 18 of the steam feed line system 17 open in the product. The tunnel orifice 10 of the discharge pipe 9 is at the low side of the treatment tunnel 1 above, in particular just above, the product boundary 108. This is so that the discharge of air via the discharge pipe 9 is not impeded by product to be treated.

## Claims

1. Installation for treating an object with steam, such as a steam cooker, comprising:
• a treatment tunnel (1) running in the horizontal direction with an entry end and an exit end, wherein the interior of the treatment tunnel (1) is in communication with the environment such that the pressure prevailing in the treatment tunnel is essentially the same as ambient pressure;
• an input section (2) adjoining the entry end for introducing the object to be treated into the treatment tunnel;
• an output section (3) adjoining the exit end for discharging the treated object from the treatment tunnel (1);
• at least one temperature sensor (14);
• a steam feed system (19) for feeding steam into the treatment tunnel (1);
• a controlled (15) that is equipped to maintain, at least in the upper section of the treatment tunnel (1), an air-free zone containing saturated steam on the basis of the signal from the at least one temperature sensor (14); and
• a transport system (7) for feeding the object to be treated through the treatment tunnel;
**characterised in that** the treatment tunnel (1) is provided at the bottom with at least one discharge pipe (9) running downwards, which at one end is in communication with the interior of the treatment tunnel (1) via a tunnel orifice (10) and at the other end with the environment via an environment orifice (11), and **in that** a said at least one temperature sensor (14) is provided in the at least one discharge pipe (9).

2. Installation according to Claim 1, **characterised in that** the controller (15) is equipped such that the air-free zone containing saturated steam extends as far as the bottom of the treatment tunnel (1).

3. Installation according to Claim 1 or 2, **characterised in that** the controller (15) is equipped such that the air-free zone containing saturated steam extends into the at least one discharge pipe (9).

4. Installation according to one of the preceding claims, **characterised in that** the steam feed system (19) opens into the top of the upper section of the treatment tunnel (1) and **in that** a cap (89) in the form of a plate is provided in the treatment tunnel (1), between the outlet of the steam feed system and the path that the object to be treated follows through the treatment tunnel (1), wherein the cap (89) slopes downwards in the lateral direction of the tunnel (1) and wherein the cap (89) is provided with perforations (90) with a raised rim (91) around each perforation (90) on the side facing upwards.

5. Installation according to one of the preceding claims, **characterised in that** the treatment tunnel (1) is subdivided into compartments (A, B, C) in the longitudinal direction, with a tunnel partition (8) suspended from the roof of the tunnel (1) at the boundary between each two compartments.

6. Installation according to Claim 5, **characterised in that** the treatment tunnel (1) is provided with a said at least one discharge pipe (9) per compartment (A, B, C), preferably with a said at least one temperature sensor (14) in said discharge pipe (9).

7. Installation according to one of the preceding claims, **characterised in that** an entry partition (92) suspended from the roof of the treatment tunnel (1) is provided at the boundary of the treatment tunnel (1) and the input section (2).

8. Installation according to one of the preceding claims, **characterised in that** an exit partition (93) suspended from the roof of the treatment tunnel (1) is provided at the boundary of the treatment tunnel (1) and the output section (3).

9. Installation according to one of the preceding claims, wherein the input section (2) and/or the output section (3) have at least one passage with an environment orifice, via which the input section (2) and/or the output section (3), respectively, are in communication with the environment, **characterised in that** the environment orifice of the passage (31) in the input section (2) located closest to the treatment tunnel (1) and/or of the passage (31) in the output section (3) located closest to the treatment tunnel (1), respectively, has a top (32) that is lower than or at the same level (P1) as the bottom of the environment orifice (11) of the at least one discharge pipe (9).

10. Installation according to Claim 9, **characterised in that** the input section (2) has an input compartment that is essentially closed with respect to the environment, and **in that** the input compartment has an input passage for objects defining the environment orifice located closest to the treatment tunnel (1).

11. Installation according to Claim 9, **characterised in that** the input section (40) has a number of input compartments (42) connected in series with, per input compartment, at the bottom a discharge pipe (43) running downwards with, in each case, a said environment orifice and **in that** an input partition (41) suspended from the roof of the input section is provided at the boundary between each two input compartments (42).

12. Installation according to Claim 9 or 10 or 11, **characterised in that** the output section (3) has an output compartment that is essentially closed with respect to the environment, and **in that** the output compartment has an output passage for objects defining the environment orifice closest to the treatment tunnel (1).

13. Installation according to Claim 9 or 10 or 11, **characterised in that** the output section (60) has a number of output compartments (42) connected in series with, per output compartment, at the bottom a discharge pipe (43) running downwards with, in each case, a said environment orifice and **in that** an output partition (41) suspended from the roof of the output section is provided at the boundary between each two output compartments (42).

14. Installation according to Claim 13, **characterised in that** the output section (60) is provided with a cooling system (61) along the base.

15. Installation according to one of the preceding claims, **characterised in that** the environment orifice (11) constitutes the bottom of the discharge pipe (9) and the tunnel orifice (10) constitutes the top of the discharge pipe (9).

## Patentansprüche

1. Anlage zur Behandlung eines Objekts mit Dampf, wie ein Dampfkocher, bestehend aus:
- einem in horizontaler Richtung verlaufenden Behandlungstunnel (1) mit einem Eintritts- und einem Austrittsende, wobei der Innenraum des Behandlungstunnels (1) mit der Umgebung in Verbindung steht, so dass der im Behandlungstunnel vorherrschende Druck im wesentlichen der gleiche wie der Umgebungsdruck ist;
- einer Eingangsstufe (2), die an das Eintrittsende anschließt, um das zu behandelnde Objekt in den Behandlungstunnel (1) einzuführen;
- einer Ausgangsstufe (3), die sich an das Austrittsende anschließt, um das zu behandelnde Objekt aus dem Behandlungstunnel (1) abzuführen;
- wenigstens einem Temperatursensor (14);
- einem Dampfzufuhrsystem (19), um Dampf in den Behandlungstunnel (1) einzuleiten;
- einem Kontroller (15), der so ausgebildet ist, dass wenigstens im oberen Abschnitt des Behandlungstunnels (1) eine luftfreie Zone, die gesättigten Dampf enthält, auf der Grundlage des Signals des wenigstens einen Temperatursensors (14) aufrechterhalten wird, und
- einem Transportsystem (7), um das zu behandelnde Objekt durch den Behandlungstunnel zu fördern
**dadurch gekennzeichnet, dass** der Behandlungstunnel (1) am Boden mit wenigstens einem nach unten verlaufenden Auslassrohr (9) versehen ist, das am einen Ende mit dem Innenraum des Behandlungstunnels (1) über eine Tunnelöffnung (10) und am anderen Ende mit der Umgebung über eine Umgebungsöffnung (11) verbunden ist, und dass der wenigstens eine Temperatursensor (14) im wenigstens einen Auslassrohr (9) angeordnet ist.

2. Anlage nach Anspruch 1, **dadurch gekennzeichnet, dass** der Kontroller (15) derart ausgebildet ist, dass sich die gesättigten Dampf enthaltende luftfreie Zone so weit wie der Boden des Behandlungstunnels (1) erstreckt.

3. Anlage nach Anspruch 1 oder 2, **dadurch gekennzeichnet, dass** der Kontroller (15) derart ausgebildet ist, dass sich die gesättigten Dampf enthaltende luftfreie Zone bis in das wenigtens eine Auslassrohr (9) erstreckt.

4. Anlage nach einem der vorhergehenden Ansprüche, **dadurch gekennzeichnet, dass** das Dampfzufuhrsystem (19) oben in den oberen Abschnitt des Behandlungstunnels (1) mündet, und dass eine Abdeckung (89) in Form einer Platte im Behandlungstunnel (1) zwischen dem Auslass des Dampfzufuhrsystems und der Bahn angeordnet ist, der das zu behandelnde Objekt durch den Behandlungstunnel (1) folgt, wobei die Abdeckung (89) in seitlicher Richtung des Tunnels (1) schräg nach unten verläuft, und wobei die Abdeckung (89) mit Perforationen mit jeweils einem erhabenen Rand (91) auf der nach oben weisenden Seite versehen ist.

5. Anlage nach einem der vorhergehenden Ansprüche, **dadurch gekennzeichnet, dass** der Behandlungstunnel (1) in Längsrichtung in Kammern (A, B, C) mit einer Tunneltrennwand (8), die an der Decke des Tunnels (1) an der Grenze zwischen je zwei Kammern aufgehängt ist, unterteilt ist.

6. Anlage nach Anspruch 5, **dadurch gekennzeichnet, dass** der Behandlungstunnel (1) mit dem wenigstens einen Auslassrohr (9) pro Kammer (A, B, C), vorzugsweise mit dem wenigstens einen Temperatursensor (14) im Auslassrohr (9), versehen ist.

7. Anlage nach einem der vorhergehenden Ansprüche, **dadurch gekennzeichnet, dass** die Eingangstrennwand (92), die an der Decke des Behandlungstunnels (1) aufgehängt ist, an der Grenze des Behandlungstunnels (1) und der Eingangsstufe (2) angeordnet ist.

8. Anlage nach einem der vorhergehenden Ansprüche, **dadurch gekennzeichnet, dass** eine Ausgangstrennwand (93), die an der Decke des Behandlungstunnels (1) aufgehängt ist, an der Grenze des Behandlungstunnels (1) und der Ausgangsstufe (3) angeordnet ist.

9. Anlage nach einem der vorhergehenden Ansprüche, bei der die Eingangsstufe (2) und/oder die Ausgangsstufe (3) wenigstens einen Kanal mit einer Umgebungsöffnung haben, über die die Eingangsstufe (2) und/oder die Ausgangsstufe (3) mit der Umgebung in Verbindung stehen, **dadurch gekennzeichnet, dass** die Umgebungsöffnung des Kanals (31) in der Eingangsstufe (2) nächstgelegen dem Behandlungstunnel (1) und/oder des Kanals (31) in der Ausgangsstufe (3) nächstgelegen dem Behandlungstunnel (1) einen oberen Rand (32) hat, der niedriger als oder auf dem gleichen Niveau (P1) wie der Boden der Umgebungsöffnung (11) des wenigstens einen Auslassrohrs (9) liegt.

10. Anlage nach Anspruch 9, **dadurch gekennzeichnet, dass** die Eingangsstufe (2) eine Eingangskammer hat, die bezüglich der Umgebung im wesentlichen geschlossen ist, und dass die Eingangskammer einen Eingangskanal für Objekte hat, der die Umgebungsöffnung nächstgelegen dem Behandlungstunnel (1) bildet.

11. Anlage nach Anspruch 9, **dadurch gekennzeichnet, dass** die Eingangsstufe (40) eine Anzahl von in Reihe geschalteten Eingangskammern (42) mit einem nach unten verlaufenden Auslassrohr (43) am Boden pro Eingangskammer jeweils mit einer Umgebungsöffnung hat, und, dass eine Eingangstrennwand (41), die an der Decke der Eingangsstufe aufgehängt ist, an der Grenze zwischen je zwei Eingangskammern (42) angeordnet ist.

12. Anlage nach Anspruch 9, 10 oder 11, **dadurch gekennzeichnet, dass** die Ausgangsstufe (3) eine Ausgangskammer hat, die bezüglich der Umgebung im wesentlichen geschlossen ist, und dass die Ausgangskammer einen Ausgangskanal für Objekte hat, die die Umgebungsöffnung nächstgelegen dem Behandlungstunnel (1) bildet.

13. Anlage nach Anspruch 9, 10 oder 11, **dadurch gekennzeichnet, dass** die Ausgangsstufe (60) eine Anzahl von in Reihe geschalteten Ausgangskammern (42) mit einem nach unten verlaufenden Auslassrohr (43) am Boden pro Ausgangskammer mit jeweils einer Umgebungsöffnung hat, und, dass eine Ausgangstrennwand (41), die an der Decke der Ausgangsstufe aufgehängt ist, an der Grenze zwischen je zwei Ausgangskammern (42) angeordnet ist.

14. Anlage nach Anspruch 13, **dadurch gekennzeichnet, dass** die Ausgangsstufe (60) mit einem längs der Basis verlaufenden Kühlsystem (61) versehen ist.

15. Anlage nach einem der vorhergehenden Ansprüche, **dadurch gekennzeichnet, dass** die Umgebungsöffnung (11) den Boden des Auslassrohrs (9), und die Tunnelöffnung (10) den oberen Rand des Auslassrohrs (9) bildet.

## Revendications

1. Installation pour traiter un objet avec de la vapeur, telle qu'un cuiseur à vapeur, comprenant :
. un tunnel de traitement (1) s'étendant dans la direction horizontale avec une extrémité d'entrée et une extrémité de sortie, dans laquelle l'intérieur du tunnel de traitement (1) est en communication avec l'environnement de sorte que la pression régnant dans le tunnel de traitement est essentiellement la même que la pression ambiante ;
. une section d'entrée (2) contiguë à l'extrémité d'entrée pour introduire l'objet devant être traité dans le tunnel de traitement (1) ;
. une section de sortie (3) contiguë à l'extrémité de sortie pour décharger l'objet traité du tunnel de traitement (1) ;
. au moins un capteur de température (14) ;
. un système d'alimentation en vapeur (19) pour délivrer de la vapeur dans le tunnel de traitement (1) ;
. un contrôleur (15) qui est équipé pour maintenir, au moins dans la section supérieure du tunnel de traitement (1), une zone exempte d'air contenant de la vapeur saturée sur la base du signal provenant dudit au moins un capteur de température (14) ; et
. un système de transport (7) pour avancer l'objet devant être traité à travers le tunnel de traitement ;
**caractérisée en ce que** le tunnel de traitement (1) est pourvu dans le fond d'au moins un tuyau de décharge (9) s'étendant vers le bas, qui, à une extrémité, est en communication avec l'intérieur du tunnel de traitement (1) par l'intermédiaire d'un orifice de tunnel (10) et, à l'autre extrémité, avec l'environnement par l'intermédiaire d'un orifice d'environnement (11), et **en ce qu'**un dit au moins un capteur de température (14) est prévu dans ledit au moins un tuyau de décharge (9).

2. Installation selon la revendication 1, **caractérisée en ce que** le contrôleur (15) est équipé de sorte la zone exempte d'air contenant de la vapeur saturée s'étende jusqu'au fond du tunnel de traitement (1).

3. Installation selon la revendication 1 ou 2, **caractérisée en ce que** le contrôleur (15) est équipé de sorte que la zone exempte d'air contenant de la vapeur saturée s'étende dans ledit au moins un tube de décharge (9).

4. Installation selon l'une des revendications précédentes, **caractérisée en ce que** le système d'approvisionnement en vapeur (19) s'ouvre dans le haut de la section supérieure du tunnel de traitement (1), et **en ce qu'**un couvercle (89) sous la forme d'une plaque est prévu dans le tunnel de traitement (1), entre la sortie du système d'alimentation en vapeur et le trajet que l'objet devant être traité suit à travers le tunnel de traitement (1), dans laquelle le couvercle (89) est incliné vers le bas dans la direction latérale du tunnel (1), et dans laquelle le couvercle (89) est pourvu de perforations (90) avec un rebord surélevé (91) autour de chaque perforation (90) sur le côté orienté vers le haut.

5. Installation selon l'une des revendications précédentes, **caractérisée en ce que** le tunnel de traitement (1) est subdivisé en compartiments (A, B, C) dans la direction longitudinale, avec une séparation de tunnel (8) suspendue au plafond du tunnel (1) à chaque frontière entre deux compartiments.

6. Installation selon la revendication 5, **caractérisée en ce que** le tunnel de traitement (1) est pourvu d'un dit au moins un tuyau de décharge (9) par compartiment (A, B, C), de préférence d'un dit au moins un capteur de température (14) dans ledit tuyau de décharge (9).

7. Installation selon l'une des revendications précédentes, **caractérisée en ce qu'**une séparation d'entrée (92) suspendue au plafond du tunnel de traitement (1) est prévue à la frontière entre le tunnel de traitement (1) et la section d'entrée (2).

8. Installation selon l'une des revendications précédentes, **caractérisée en ce qu'**une séparation de sortie (93) suspendue au plafond du tunnel de traitement (1) est prévue à la frontière entre le tunnel de traitement (1) et la section de sortie (3).

9. Installation selon l'une des revendications précédentes, dans laquelle la section d'entrée (2) et/ou la section de sortie (3) ont au moins un passage comportant un orifice d'environnement, par lequel la section d'entrée (2) et/ou la section de sortie (3), respectivement, sont en communication avec l'environnement, **caractérisée en ce que** l'orifice d'environnement du passage (31) dans la section d'entrée (2) situé le plus près du tunnel de traitement (1) et/ou du passage (31) dans la section de sortie (3) situé le plus près du tunnel de traitement (1), respectivement, a une partie supérieure (32) qui est plus basse que ou au même niveau (P1) que le fond de l'orifice d'environnement (11) dudit au moins un tuyau de décharge (9).

10. Installation selon la revendication 9, **caractérisée en ce que** la section d'entrée (2) comporte un compartiment d'entrée qui est essentiellement fermé par rapport à l'environnement, et **en ce que** le compartiment d'entrée comporte un passage d'entrée pour des objets définissant l'orifice d'environnement situé le plus près du tunnel de traitement (1).

11. Installation selon la revendication 9, **caractérisée en ce que** la section d'entrée (40) comporte un certain nombre de compartiments d'entrée (42) reliés en série avec, par compartiment d'entrée, au fond un tuyau de décharge (43) s'étendant vers le bas avec, dans chaque cas, un dit orifice d'environnement, et **en ce qu'**une séparation d'entrée (44) suspendue au plafond de la section d'entrée est prévue à chaque frontière entre deux compartiments d'entrée (42).

12. Installation selon la revendication 9 ou 10 ou 11, **caractérisée en ce que** la section de sortie (3) comporte un compartiment de sortie qui est essentiellement fermé par rapport à l'environnement, et **en ce que** le compartiment de sortie comporte un passage de sortie pour des objets définissant l'orifice d'environnement le plus proche du tunnel de traitement (1).

13. Installation selon la revendication 9 ou 10 ou 11, **caractérisée en ce que** la section de sortie (60) comporte un certain nombre de compartiments de sortie (42) reliés en série avec, par compartiment de sortie, au fond un tuyau de décharge (43) s'étendant vers le bas avec, dans chaque cas, un dit orifice d'environnement, et **en ce qu'**une séparation de sortie (44) suspendue au plafond de la section de sortie est prévue à chaque frontière entre deux compartiments de sortie (42).

14. Installation selon la revendication 13, **caractérisée en ce que** la section de sortie (60) est pourvue d'un système de refroidissement (61) le long de la base.

15. Installation selon l'une des revendications précédentes, **caractérisée en ce que** l'orifice d'environnement (11) constitue le fond du tuyau de décharge (9) et l'orifice de tunnel (10) constitue le haut du tuyau de décharge (9).
